# EUROPÄISCHE PATENTSCHRIFT

(11) **EP 3 553 791 B1**
(45) Veröffentlichungstag und Bekanntmachung des Hinweises auf die Patenterteilung: **05.08.2020**
(21) Anmeldenummer: 19163873.3
(22) Anmeldetag: 19.03.2019
(51) Int. Cl.: G21F 5/14, G21D 1/00, G21F 9/36, G21F 9/30, G21F 9/28, G21F 5/005, B23D 45/00, B28D 1/04, B23D 45/12

(54) **FASS-ZERLEGEANLAGE**
BARREL DISASSEMBLY SYSTEM
INSTALLATION DE PRÉHENSION ET DE DÉCOUPE

(30) Priorität: 12.04.2018 AT 503112018
(43) Veröffentlichungstag der Anmeldung: 16.10.2019
(73) Patentinhaber: Braun Maschinenfabrik GmbH, 4840 Vöcklabruck (AT)
(72) Erfinder: ÜBLEIS, Siegfried, 4840 Vöcklabruck (AT); STEININGER, Roland, 2444 Seibersdorf (AT); TROMBITAS, Herbert, 2444 Seibersdorf (AT)
(74) Vertreter: KLIMENT & HENHAPEL

(56) Entgegenhaltungen:
- DE-A1- 10 111 595
- DE-A1-102010 034 016
- FR-A1- 3 007 883

## Beschreibung

Die Erfindung betrifft eine Vorrichtung zum Entmanteln, Öffnen oder Zurichten stahlummantelter Fässer mit einbetoniertem radioaktivem Inhalt, gemäß dem Oberbegriff von Anspruch 1.

Seit mehr als fünf Jahrzehnten werden radioaktive Abfälle gesammelt, behandelt und gelagert. Ziel der Maßnahmen ist die chemische Stabilisierung und ein sicherer Einschluss der Radionuklide in den Abfallformen, und die Erzielung eines möglichst geringen Abfallvolumens, da die Zwischen- und Endlagerung mit beträchtlichen Kosten verbunden ist. Vorrichtungen zum Entmanteln, Öffnen oder Zurichten stahlummantelter Fässer mit einbetoniertem radioaktiven Inhalt wurden etwa in der FR 3 007 883 A1 beschrieben. Verfahren und Vorrichtungen zum Auslösen eines Bohrkerns wurden in der DE 101 11 595 A1 beschrieben.

Zur Erreichung dieser Ziele wurde und wird häufig die Zementierung eingesetzt. Hier kann zwischen zwei Abfallformen unterschieden werden, nämlich die homogene und die inhomogene Zementierung.

Bei der homogenen Zementierung werden feste und flüssige Abfälle mit Zement, Wasser und gegebenenfalls Zuschlägen wie Schotter oder Betonverflüssiger vermischt. Als Abfallform resultiert ein Betonblock, in dem die Radionuklide gleichmäßig verteilt sind. Dieser Betonblock befindet sich üblicherweise in einem Stahlblechfass, zumeist mit 200 l Volumen. Der Mischvorgang kann entweder direkt in diesem Fass mit einem Infassmischer durchgeführt werden, oder in einem eigenen Mischapparat, bevor die noch flüssige Betonmischung in die Fässer abgefüllt wird. Die so entstandenen Fässer werden im folgenden auch als homogene Fässer bezeichnet.

Bei der inhomogenen Zementierung werden Abfälle zumeist lose in 100 1-Fässer gefüllt. Diese Fässer werden mit einem Deckel verschlossen, in ein 200 1-Fass eingestellt und der Zwischenraum mit Beton verfüllt. Diese Vorgangsweise wurde in der Vergangenheit wegen der fehlenden Konditionierungseinrichtungen für brennbare und flüssige radioaktive Abfälle gewählt, wäre aus heutiger Sicht aber nicht mehr genehmigungsfähig. Die so entstandenen Fässer werden im folgenden auch als inhomogene Fässer bezeichnet. Sowohl bei homogenen als auch bei inhomogenen Fässern handelt es sich um stahlummantelte Fässer mit einbetoniertem radioaktivem Inhalt.

Die so konditionierten Abfälle werden nunmehr für lange Zeit gelagert. Da in vielen Ländern noch keine Endlager für radioaktive Abfälle in Betrieb sind, werden die Fässer in Lagerhallen zwischengelagert. Bei diesen Lagerbedingungen ist meist mit Kondensation von Luftfeuchtigkeit an der Außen- und Innenseite der Fässer zu rechnen.

In vielen Zwischenlagern wurde Korrosion von Stahlblechfässern mit zementierten Abfällen beobachtet. Hierfür wurden bislang mehrere Ursachen identifiziert:
-) Eine ungenügende chemische Beständigkeit der Innenbeschichtung. Frischer Beton sondert immer hochalkalisches Wasser ab, das bei vielen Lacken als Abbeizmittel wirkt.
-) Eine mechanische Verletzung der Innenbeschichtung, die insbesondere beim Mischen oder Einfüllen des Frischbetons auftreten kann.
-) Ein hoher Wasseranteil im Abfallprodukt.
-) Kondensation in Folge von Schwankungen von Temperatur und Luftfeuchtigkeit in den Lagerräumen.

Um eine langzeitstabile Zwischenlagerung garantieren zu können, müssen daher geeignete Zusatzmaßnahmen ("Nach- und Rekonditionierung") getroffen werden. So wurde zur Nachbehandlung homogen zementierter Abfallgebinde etwa vorgeschlagen, das Gebinde in passende Überfässer einzustellen, wobei gegebenenfalls zuvor das enthaltene Wasser durch einen Trocknungsprozess entfernt werden muss, um das Reaktions- und Korrosionspotential zu verringern. Moderne Fässer für konditionierte Abfälle haben einen vollflächig eingeklebten Innenliner aus glasfaserverstärktem Kunststoff mit ausreichender Dicke. Dadurch wird gewährleistet, dass die Innenlackierung bei der Beladung nicht beschädigt wird. Beim Einstellen in Überfässer muss hinsichtlich der Umladung darauf geachtet werden, dass zunächst eine ausreichend dicke, vorverdichtete, trockene Sandschicht im Fassboden eingebracht wird, bevor dass 200-1-Fass eingestellt werden kann. Anschließend muss der Hohlraum mit Sand verfüllt und verdichtet werden. Diese Prozedur muss so lange wiederholt werden, bis das Fass randvoll gefüllt ist. Nur so kann eine halbwegs sichere Positionierung des Innenfasses erreicht werden, um Beschädigungen des Überfasses zu vermeiden.

Die Vorteile dieses Verfahrens sind geringe Anforderungen an den Strahlenschutz, einfaches Manipulieren der Fässer, kurze Bearbeitungszeiten und damit verbundene geringe operative Kosten. Nachteilig im Hinblick auf das Endlagervolumen ist jedoch, dass das Überfasskonzept eine Volumenvermehrung von rund 40 % zur Folge hat, was die Lagerkosten wieder entsprechend erhöht. Zudem ist die Trocknung von großvolumigen Betonkörpern ein sehr aufwändiger Prozess. Bei der üblicherweise angewandten Erwärmung von außen, beispielsweise in Umlufttrocknungskammern, ergeben sich lange Trocknungszeiten, da der Beton eine geringe Wärmeleitfähigkeit aufweist, die sich durch den von außen nach innen fortschreitenden Trocknungsvorgang zusätzlich noch verringert. Eine gleichmäßige Erwärmung von außen kann grundsätzlich auch mit Mikrowellen erfolgen. Allerdings erfährt der entstehende Wasserdampf einen hohen Diffusionswiderstand, sodass es zu einem Druckaufbau im Inneren des Körpers und letztlich zum Zerspringen der Betonblöcke kommt.

Des Weiteren wurde vorgeschlagen, die Außenseite der Fässer mit einem mechanisch und chemisch ausreichend stabilen Material zu beschichten, beispielsweise Polyurethan mit mehreren Millimetern Schichtdicke, wobei ein vorgeschalteter Trocknungsprozess notwendig sein kann. Die Beschichtung ist aber ebenfalls ein sehr aufwändiger Prozess, und ist mit den üblichen Problemen von Lackieranlagen hinsichtlich Abluftreinigung oder der Entfernung und Entsorgung von Overspray behaftet. Bei der Lagerung kann zudem die auf Grund der dicken Beschichtung erhöhte Brandlast als problematisch eingestuft werden.

Daher wurde auch vorgeschlagen mittels einer Kernbohrung die Fässer gleichzeitig zu Entmanteln, also den Stahlmantel der äußeren Fasshülle zu entfernen, und den Betonkern geeignet zuzurichten, also eine geometrische Anpassung der Betonkörper für das Einbringen in neue Fässer vorzunehmen. Hierbei wird der stahlummantelte Betonkern mittels einer Diamantbohrkrone "überbohrt", also eine Bohrung in einer axialen Vorschubbewegung zwischen dem äußeren Stahlmantel und dem Betonkern vorgenommen. Der durchmesserreduzierte Betonkern kann in weiterer Folge in ein neues Fass eingebracht werden. Um eine ausreichende Kühlung und Spülung der Diamantbohrkrone zu gewährleisten, muss aber dafür gesorgt werden, dass beim Arbeiten mit Diamantkernbohrsytemen Wasser zugeführt wird. Pro Bohrvorgang müssen ca. 200 1 Wasser zugeführt werden. Eine Reduktion der Wassermengen führt zu einem erhöhten Verschleiß der Diamantsegmente und im Extremfall zum Ablösen der Segmente. Beim vertikalen Ausbohren im Fass kommt es durch zu großes Spiel in den Schlittenführungen auch immer wieder zum "Verlaufen" der Diamantbohrkrone. Die dadurch verursachte schlechte Führung der Diamantbohrkrone im Bohrloch führt zum Verklemmen der Bohrkrone. Des Weiteren führen lose Teile im Beton, beispielsweise abgeschnittenes Armierungseisen oder Zuschlagstoffe, ebenfalls zu einer Verklemmung der Bohrkrone. Der Ausbau von verklemmten Diamantbohrkronen ist aber nur unter großem zeitlichen und personellen Aufwand möglich.

Als großer Nachteil der Re- und Nachkonditionierung mittels Nasskernbohrung erweist sich vor allem aber auch der Anfall großer Mengen an Sekundärabfällen, die zusätzliche Aufarbeitungs- und Konditionierungskosten für die Wasseraufbereitung oder für die Kompaktierung und Trocknung von Schlamm- und Betonbruch nach sich ziehen. Weiters wirkt sich nachteilig aus, dass die nass ausgebohrten Betonzylinder ebenfalls einer Trocknung zugeführt werden müssen und damit entsprechende Zusatzkosten verbunden sind. Für Revisionsarbeiten und Wartungsarbeiten ist zudem mit einem hohen Dekontaminationsaufwand zu rechnen. Nachteilig wirken sich auch die im Vergleich zu anderen Verfahrenstechniken geringen Werkzeugstandzeiten, erhöhter Platzbedarf der Anlagentechnik und Fehleranfälligkeit aus.

Es besteht somit das Ziel der Erfindung eine Vorrichtung zum Entmanteln, Öffnen oder Zurichten stahlummantelter Fässer mit einbetoniertem radioaktiven Inhalt bereitzustellen, die die Nachteile des Stands der Technik nicht aufweist, wobei die Behandlung inhomogener sowie homogener Fässer möglich sein soll, und insbesondere stahlummantelte Fässer mit einbetoniertem radioaktivem Inhalt ohne erforderliche Wasserkühlung geöffnet, entmantelt und zugerichtet werden können.

Dieses Ziel wird durch die Merkmale von Anspruch 1 erreicht. Anspruch 1 bezieht sich auf eine Vorrichtung zum Entmanteln, Öffnen oder Zurichten stahlummantelter Fässer mit einbetoniertem radioaktivem Inhalt, bei der erfindungsgemäß vorgeschlagen wird, dass eine Bearbeitungskammer mit einer Übernahmeöffnung für die Fässer vorgesehen ist, sowie eine in der Bearbeitungskammer angeordnete Kipp- und Dreheinheit zur Aufnahme der Fässer, wobei ein mit seiner Längsachse parallel zu einer Längserstreckung der Kipp- und Dreheinheit aufgenommenes Fass von der Kipp- und Dreheinheit um seine Längsachse drehbar ist, und die Kipp- und Dreheinheit von einer aufrechten Position mit einer im Wesentlichen vertikalen Längserstreckung der Kipp- und Dreheinheit in eine liegende Position mit einer im Wesentlichen horizontalen Längserstreckung der Kipp- und Dreheinheit kippbar ist, sowie zumindest zwei Säge- oder Fräswerkzeuge vorgesehen sind, wobei zumindest ein Säge- oder Fräswerkzeug zum Entmanteln, Öffnen oder Zurichten des Fasses bei aufrechter Position der Kipp-und Dreheinheit in seiner Vorschubbewegung quer zur Längserstreckung der Kipp- und Dreheinheit geführt ist, und zumindest ein Säge- oder Fräswerkzeug zum Entmanteln, Öffnen oder Zurichten des Fasses bei liegender Position der Kipp- und Dreheinheit in seiner Vorschubbewegung entlang der Längserstreckung der Kipp- und Dreheinheit geführt ist. Mit der erfindungsgemäßen Kombination an Vorschubbewegungen der Säge- oder Fräswerkzeuge einerseits und der Kipp- und Drehbewegung der Kipp- und Dreheinheit andererseits gelingt es mithilfe von lediglich zwei Säge- oder Fräswerkzeugen die erforderlichen Bearbeitungsschritte für das Entmanteln, Öffnen oder Zurichten stahlummantelter Fässer mit einbetoniertem radioaktivem Inhalt sowohl für inhomogene als auch homogene Fässer zu bewerkstelligen. Auf ein Überbohren der Fässer wird dabei nicht zurückgegriffen, stattdessen erfolgt die Bearbeitung der Fässer zum Einen mit einer quer zur Längserstreckung der Kipp- und Dreheinheit geführten Vorschubbewegung des Säge- oder Fräswerkzeuges bei aufrechter Position der Kipp- und Dreheinheit, sowie zum Anderen mit einer entlang der Längserstreckung der Kipp- und Dreheinheit geführten Vorschubbewegung des Säge- oder Fräswerkzeuges bei liegender Position der Kipp-und Dreheinheit. Die Bearbeitung der Fässer erfolgt dabei von außen, wobei Säge- oder Fräswerkzeuge verwendet werden können, die keiner Wasserkühlung bedürfen. Mit anderen Worten ermöglicht das erfindungsgemäße Bearbeitungskonzept eine Trockenzerlegung der Fässer, was bislang als unmöglich galt. Bei inhomogenen Fässern kann bei aufrechter Position der Kipp- und Dreheinheit, was einer stehenden Position des Fasses entspricht, nach manueller Entfernung des äußeren Fassdeckels und somit Freilegung des Betonkerns mit einer quer zur Längserstreckung der Kipp- und Dreheinheit geführten Vorschubbewegung des Säge- oder Fräswerkzeuges das Fass im Deckelbereich gekappt werden, um auf diese Weise auch das innere Fass zu öffnen. Diese Vörschubbewegung wird im Folgenden auch als Radialschnitt bezeichnet, auch wenn die Vorschubbewegung nicht exakt radial verlaufen muss. Der abgetrennte Deckelbereich kann bei stehender Position des Fasses mithilfe von Hebeeinrichtungen abgehoben werden. In weiterer Folge kann das nun geöffnete Fass mittels der Kipp-und Dreheinheit in eine liegende Lage gekippt werden, um den radioaktiven Inhalt begutachten und 'ausräumen zu können. Die Abfälle können entnommen und entsprechend den heutigen Anforderungen behandelt werden, etwa durch Verbrennung brennbarer Abfälle, durch chemisch-physikalische Behandlung wässriger Flüssigkeiten, oder durch Kompaktieren von festen, nicht brennbaren Abfällen. Der Betonmantel kann auf Kontamination überprüft und in transportable bzw. lagerfähige Teile zerschnitten werden. Die zerlegten Teile des Fasses werden entsprechend ihrer Beschaffenheit weiterbehandelt, etwa durch Umschmelzen der Stahlbleche. Das Zerlegen der Mantelteile in Mantelsegmente erfolgt bei liegender Position der Kipp- und Dreheinheit, die einer liegenden Position des Fasses entspricht, mit der erfindungsgemäß entlang der Längserstreckung der Kipp- und Dreheinheit geführten Vorschubbewegung des Säge- oder Fräswerkzeuges. Diese Vorschubbewegung wird im Folgenden auch als Axialschnitt bezeichnet, auch wenn die Vorschubbewegung nicht exakt axial verlaufen muss.

Bei homogenen Fässern kann nach Entfernen des Fassdeckels und somit Freilegung des Betonkerns mit der quer zur Längserstreckung der Kipp- und Dreheinheit geführten Vorschubbewegung des Säge- oder Fräswerkzeuges der Stahlmantel des Fasses im Bodenbereich eingeschnitten werden. In weiterer Folge kann das Fass mittels der Kipp- und Dreheinheit in eine liegende Lage gekippt werden. In liegender Position der Kipp-und Dreheinheit, die einer liegenden Position des Fasses entspricht, kann mit einer erfindungsgemäß entlang der Längserstreckung der Kipp- und Dreheinheit geführten Vorschubbewegung des Säge- oder Fräswerkzeuges der Stahlmantel durch Axialschnitte aufgeschnitten werden. Durch den zuvor gesetzten Radialschnitt im Bodenbereich werden Mantelsegmente erzeugt, die leicht manuell entfernt werden können. In weiterer Folge kann mit einer weiteren, entlang der Längserstreckung der Kipp- und Dreheinheit geführten Vorschubbewegung des Säge- oder Fräswerkzeuges der Betonmantel abgefräst werden, um ihn in seinem Durchmesser zu reduzieren und den so zugerichteten Betonkern in ein neues Fass umpacken zu können. In der Regel beträgt die Vorgabe darin, außen eine Schicht von etwa 10mm abzutragen. Die Bearbeitung in liegender Position des Fasses ermöglicht es auch, das Fass über seine gesamte Längserstreckung fräsend zu bearbeiten, was bei aufrechter Position kaum oder nur schwer möglich wäre.

Das Einschneiden des Stahlmantels und das Abfräsen des Betonkerns bei jeweils liegender Position des Fasses könnten mit demselben Säge- oder Fräswerkzeughalter nach Tausch des Sägewerkzeugs gegen ein Fräswerkzeug erfolgen. Um ein Umspannen des Säge- oder Fräswerkzeuges zu vermeiden wird vorzugsweise vorgeschlagen, dass zwei rotierende Säge- oder Fräswerkzeuge zum Entmanteln, Öffnen oder Zurichten des Fasses bei liegender Position der Kipp- und Dreheinheit vorgesehen sind, die jeweils entlang der Längserstreckung der Kipp- und Dreheinheit bewegbar sind, wobei eines der beiden Säge- oder Fräswerkzeuge als ein entlang der Längserstreckung der Kipp-und Dreheinheit geführtes Sägewerkzeug mit horizontaler Rotationsebene ausgeführt ist, und eines der beiden Säge- oder Fräswerkzeuge als ein entlang der Längserstreckung der Kipp- und Dreheinheit geführtes Fräswerkzeug mit vertikaler Rotationsebene ausgeführt ist. Das Sägewerkzeug und das Fräswerkzeug sind an gegenüberliegenden Seiten der Kipp-und Dreheinheit angeordnet, wobei das Sägewerkzeug Axialschnitte setzt und den Fassmantel somit in axialer Richtung durchtrennt, und das Fräswerkzeug bei inhomogenen Fässern den Betonkern von außen abfräst. Diese Vorgänge werden durch die Kipp- und Dreheinheit unterstützt, indem sie beim Auftrennen des Mantels nach dem Setzen eines Axialschnittes das Fass um seine Längsachse um einen Winkel von beispielsweise 120° rotiert, um danach einen neuen Axialschnitt zu setzen. Beim Abfräsen des Betonkernmantels kann das Fass mithilfe der Kipp- und Dreheinheit um seine Längsachse rotiert werden, um den Fräsvorgang zu unterstützen.

Des Weiteren wird vorgeschlagen, dass ein quer zur Längserstreckung der Kipp- und Dreheinheit geführtes, rotierendes Sägewerkzeug zum Entmanteln, Öffnen oder Zurichten des Fasses bei aufrechter Position der Kipp- und Dreheinheit mit horizontaler Rotationsebene vorgesehen ist. Dieses Sägewerkzeug vollzieht die erfindungsgemäß vorgesehene Vorschubbewegung quer zur Längserstreckung der Kipp- und Dreheinheit, die hier auch als Radialschnitt bezeichnet wird, etwa um bei inhomogenen Fässern das Fass im Deckelbereich zu kappen, oder bei homogenen Fässern den Stahlmantel des Fasses im Bodenbereich einzuschneiden.

Vorzugsweise sind die Säge- oder Fräswerkzeuge jeweils auf einem horizontal bewegbaren Schlitten gelagert. Diese Lagerung dient bei den für die Bearbeitung der Fässer in ihrer liegenden Position vorgesehenen Säge- oder Fräswerkzeugen zur Führung der Vorschubbewegung der Säge- oder Fräswerkzeuge entlang der Längserstreckung der Kipp- und Dreheinheit. Der Schlitten ist dabei jeweils auf einer Schiene geführt, die sich neben der Kipp- oder Dreheinheit in ihrer liegenden Lage horizontal erstreckt. Bei dem für die Bearbeitung der Fässer in ihrer stehenden Position vorgesehenen Sägewerkzeug dient der horizontale Schlitten dazu, das Sägewerkzeug von einer seitlichen Parkposition in eine mittig der Schiene angeordnete Bearbeitungsposition zu bewegen. Dieser Schlitten ist etwa auf einer Schiene geführt, die sich im Bereich der Übernahmeöffnung horizontal, aber rechtwinklig zu den beiden oben genannten Schienen erstreckt.

Bei den Säge- oder Fräswerkzeugen handelt es sich vorzugsweise um rotierende Säge- oder Fräswerkzeuge, die jeweils von einem Schwenkarm mit einer zur Rotationsebene des jeweiligen Säge-oder Fräswerkzeuges rechtwinkeligen Schwenkachse geführt sind. An einem ersten Ende ist der Schwenkarm jeweils am oben genannten Schlitten angelenkt, und am gegenüberliegenden, freien Ende des Schwenkarmes ist das Säge- oder Fräswerkzeug befestigt. Die Sägewerkzeuge mit horizontaler Rotationsebene sind somit jeweils um eine vertikale Schwenkachse schwenkbar, und das Fräswerkzeug mit vertikaler Rotationsebene ist um eine horizontale Schwenkachse schwenkbar, wobei der Schwenkarm jeweils vorzugsweise um 360° schwenkbar ist. Über den Schwenkarm wird der Anpressdruck des Säge- oder Fräswerkzeuges sichergestellt, also die in radialer Richtung in das Fass eindringende Bewegung der Säge- oder Fräswerkzeuge.

Vorzugsweise kann des Weiteren vorgesehen sein, dass das zumindest eine Säge- oder Fräswerkzeug auf einem vertikal bewegbaren Schlitten gelagert ist. Bei dem zum Entmanteln, Öffnen oder Zurichten des Fasses bei aufrechter Position der Kipp- und Dreheinheit vorgesehenen Sägewerkzeug ist diese vertikal bewegliche Lagerung des Sägewerkzeuges vorteilhaft, da dieses Säge- oder Fräswerkzeug bei inhomogenen Fässern das Fass im Deckelbereich kappen muss, und bei homogenen Fässern den Stahlmantel des Fasses im Bodenbereich einschneiden muss, und somit eine Bearbeitung des Fasses auf unterschiedlicher Höhe erforderlich ist. Zudem kann die vertikale Beweglichkeit auch eingesetzt werden, um das Fass in seiner Höhe zuzurichten. Bei den zum Entmanteln, Öffnen oder Zurichten des Fasses bei liegender Position der Kipp- und Dreheinheit vorgesehenen Säge- oder Fräswerkzeugen ist diese vertikal bewegliche Lagerung vorteilhaft, um beispielsweise auch Fässer unterschiedlicher Durchmesser bearbeiten zu können.

Zudem wird vorgeschlagen, dass die Bearbeitungskammer mit einer verschließbaren Dachöffnung versehen ist. Diese Dachöffnung dient etwa dazu bei der Bearbeitung von inhomogenen Fässern den abgetrennten Deckelbereich bei stehender Position des Fasses oder abgetrennte Betonteile bei liegender Position des Fasses mithilfe von Hebeeinrichtungen aus der Bearbeitungskammer zu heben. Die verschließbare Dachöffnung kann etwa als Flügel- oder Schiebedecke ausgeführt sein.

Um die Staub- und Kontaminationsbelastung innerhalb der Bearbeitungskammer so gering wie möglich zu halten ist zudem vorzugsweise vorgesehen, dass die rotierenden Säge- oder Fräswerkzeuge in ihrem Umfangsbereich mit einer Staubabsaugung versehen sind. Diese Staubabsaugung umfasst Schutzhauben für die Säge- oder Fräswerkzeuge, sowie eine Absauganlage, sodass Säge- oder Frässtaub etwa über einen Zyklon-Vorabscheider in eine Filteranlage abgesaugt werden kann.

Eine mögliche Ausführung der Kipp- und Dreheinheit sieht vorzugsweise vor, dass die Kipp- und Dreheinheit eine den Mantel eines aufgenommenen Fasses teilweise umfassende Aufnahme mit einer konkaven Aufnahmefläche aufweist, wobei die Aufnahme mit die Aufnahmefläche überragende Drehrollen versehen ist. Das aufgenommene Fass liegt an den Drehrollen an und wird von ihnen um seine Längsachse in Drehung versetzt. Dabei ruht das Fass auf einem Drehteller der Kipp- und Dreheinheit, wobei Lagerrollen vorgesehen sein können, um die Drehbewegung zu erleichtern. Die Drehrollen können so ausgeführt sein, dass das Fass in stehender Position während der Drehbewegung ein Moment in Richtung des Drehtellers ausübt. Zudem ist es vorteilhaft, wenn die Kipp- und Dreheinheit in ihrer aufrechten Position leicht aus der Vertikalen gekippt ist, sodass das Fass mit einem Teil seines Eigengewichts auf den Drehrollen ruht und den Reibschluss somit erhöht. In der horizontalen Position des Fasses ruht das Fass ohnehin mit seinem gesamten Eigengewicht auf den Drehrollen, was einen ausreichenden Reibschluss sicherstellt. Die Erfindung wird in weiterer Folge anhand eines Ausführungsbeispiels mithilfe der beiliegenden Figuren näher erläutert. Hierbei zeigen die
Fig. 1 eine Ausführungsform der erfindungsgemäßen Vorrichtung von der Seite gesehen,
Fig. 2 die Ausführungsform der Fig. 1 von vorne aus der Sciht der Übernahmeöffnung gesehen,
Fig. 3 die Ausführungsform der Fig. 1 von oben gesehen,
Fig. 4 eine perspektivische Ansicht der Ausführungsform der Fig. 1,
Fig. 5 eine mögliche Ausführungsform der Lagerung eines Säge-oder Fräswerkzeuges mit Schwenkarm und Schlitten, und die
Fig. 6 die Ausführungsform gemäß Fig. 5 von der Seite gesehen.

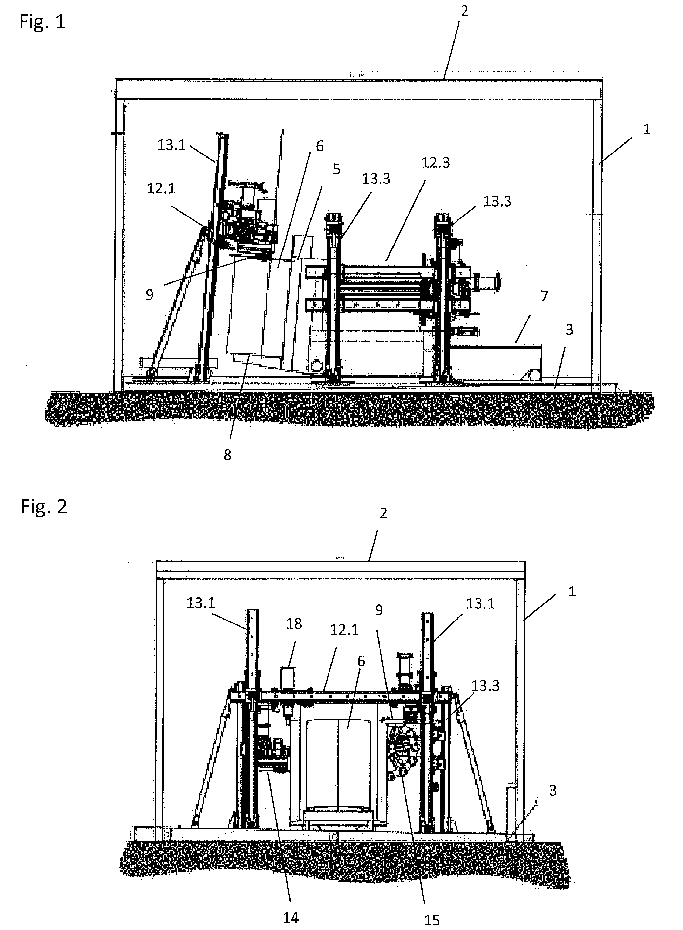

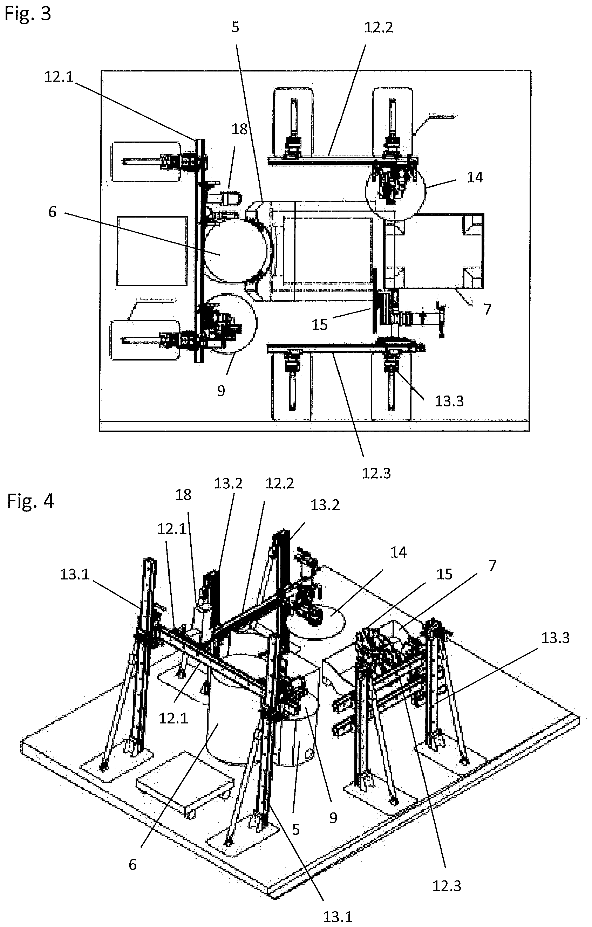

Zunächst wird auf die Fig. 1 bis 4 Bezug genommen, die eine Ausführungsform der erfindungsgemäßen Vorrichtung zeigen, wobei die Fig. 1 und 2 die Seitenwände 1 und das Dach 2 der Bearbeitungskammer zeigen, und bei den Fig. 3 und 4 die Seitenwände 1 und das Dach 2 weggelassen wurden. Die Vorrichtung wird auf einer als dichte Edelstahlwanne ausgeführten Bodenplatte 3 aufgebaut. Die Bearbeitungskammer ist schalldicht ausgeführt und mit zwei Flügeltoren an der Front- und Rückseite ausgestattet, von denen ein Flügeltor eine Übernahmeöffnung zum Transport der Fässer 6 in die Bearbeitungskammer bildet, und das zweite Flügeltor den Abtransport des radioaktiven Inhaltes inhomogener Fässer 6 ermöglicht. Die Bearbeitungskammer wird auf der Seite der Übernahmeöffnung beschickt, wobei Transportwägen 4 vorgesehen sein können, um das Fass 6 auf geeigneter Höhe zur Kipp- und Dreheinheit 5 zu bewegen. Des Weiteren ist die Bearbeitungskammer mit einer verschließbaren Dachöffnung versehen, die etwa als Flügeldecke oder Schiebedecke ausgeführt sein kann, um Betonteile mit einer Hebeeinrichtung wie einem Kran und dergleichen aus der Bearbeitungskammer entfernen zu können.

In den Fig. 1 bis 4 ist ferner eine fahrbare Auffangtasse 7 aus Edelstahl ersichtlich, um den Inhalt der inhomogenen Fässer abtransportieren zu können. Diese Auffangtasse 7 ist so ausgeführt, dass sie unter die Kipp- und Dreheinheit 5 geschoben werden kann, um eine Kontaminationsverschleppung zu vermeiden.

Die Kipp- und Dreheinheit 5 weist eine den Mantel eines aufgenommenen Fasses 6 teilweise umfassende Aufnahme mit einer konkaven Aufnahmefläche auf, wobei die Aufnahme mit die Aufnahmefläche überragende Drehrollen versehen ist. Das aufgenommene Fass 6 liegt an den Drehrollen an und wird von ihnen um seine Längsachse in Drehung versetzt. Dabei ruht das Fass 6 auf einem Drehteller 8 der Kipp- und Dreheinheit 5, wobei Lagerrollen vorgesehen sein können, um die Drehbewegung zu erleichtern. Die Kipp-und Dreheinheit 5 ist kippbar konstruiert, sodass das Fass 6 von einer aufrechten Position in eine liegende Position (siehe strichlierte Position der Kipp- und Dreheinheit 5 in den Fig. 1 und 3) gebracht werden kann, wobei das Fass 6 von den Drehrollen in aufrechter und liegender Position während der Bearbeitung gedreht werden kann. Die Drehrollen können so ausgeführt werden, dass das Fass 6 in aufrechter Position während der Drehbewegung um seine Längsachse ein Moment in Richtung des Drehtellers 8 ausübt. Sollte dieses Moment nicht reichen, kann eine zusätzliche schwenkbare Anpressrolle verbaut werden. In der liegenden Position des Fasses 6 reicht das Eigengewicht des Fasses 6, um den nötigen Anpressdruck zu erzeugen. Zudem ist es vorteilhaft, wenn die Kipp- und Dreheinheit 5 in ihrer aufrechten Position leicht aus der Vertikalen gekippt ist, sodass das Fass 6 mit einem Teil seines Eigengewichts auf den Drehrollen ruht und den Anpressdruck somit erhöht. In der horizontalen Position des Fasses 6 ruht das Fass 6 ohnehin mit seinem gesamten Eigengewicht auf den Drehrollen, was einen ausreichenden Anpressdruck sicherstellt.

Im Bereich der Übernahmeöffnung ist ein erstes, rotierendes Sägewerkzeug 9 zum Entmanteln, Öffnen oder Zurichten des Fasses 6 bei aufrechter Position der Kipp- und Dreheinheit 5 mit horizontaler Rotationsebene vorgesehen. Dieses Sägewerkzeug 9 vollzieht die erfindungsgemäß vorgesehene Vorschubbewegung quer zur Längserstreckung der Kipp- und Dreheinheit 5, die hier auch als Radialschnitt bezeichnet wird, etwa um bei inhomogenen Fässern 6 das Fass 6 im Deckelbereich zu kappen, oder bei homogenen Fässern 6 den Stahlmantel des Fasses 6 im Bodenbereich einzuschneiden. Dieses Sägewerkzeug 9 ist mit einem Schwenkarm 10.1 ausgestattet, welcher das Sägeblatt in das Fass 6 eintaucht. Der Schwenkarm 10.1 ist auf einem spielfreien Schlitten 11.1 montiert und lässt sich mithilfe einer horizontalen Schiene 12.1 horizontal und mithilfe eines im Wesentlichen vertikalen Schienenpaars 13.1 vertikal stufenlos positionieren. Das erste Sägewerkzeug 9 wird etwa mit einer Leistung von 18 kW und einer Antriebsdrehzahl von maximal 1200 U/min bei einem Sägeblattdurchmesser von maximal 800 mm betrieben.

Auf der horizontalen Schiene 12.1 kann des Weiteren eine Bohreinheit 18 horizontal beweglich angeordnet sein. Die Bohreinheit 18 befindet sich während des Schneidvorgangs in einer seitlichen Parkposition und wird im Bedarfsfall über dem Fass 6 positioniert. In diesem Bedarfsfall wird das Sägewerkzeug 9 in eine seitliche Parkposition am Schienenende bewegt. Die Bohreinheit 18 dient zum Bohren von Ankerbohrungen im Fass 6, um den wieder aufgerichteten, zugerichteten Betonmantel leichter aus der Bearbeitungskammer entfernen und in neue Aufnahmefässer einsetzen zu können. Die Vorschubbewegung der Bohreinheit 18 erfolgt über die Höhenverstellung des Sägewerkzeugs 9 mithilfe der vertikalen Schienen 13.1. Die Bohreinheit 18 wird etwa mit einer Leistung von 3.7 kW, einer Drehzahl von 340-2580 U/min und einem Bohrbereich von 20-280 mm betrieben.

Das Einschneiden des Stahlmantels und das Abfräsen des Betonkerns bei jeweils liegender Position des Fasses 6 sind ein zweites Sägewerkzeug 14 mit horizontaler Rotationsebene und ein Fräswerkzeug 15 mit vertikaler Rotationsebene vorgesehen, die jeweils entlang der Längserstreckung der Kipp-und Dreheinheit 5 bewegbar sind. Das zweite Sägewerkzeug 14 und das Fräswerkzeug 15 sind an gegenüberliegenden Seiten der Kipp- und Dreheinheit 5 angeordnet, wobei das zweite Sägewerkzeug 14 Axialschnitte setzt und den Fassmantel somit in axialer Richtung durchtrennt, und das Fräswerkzeug 15 bei inhomogenen Fässern den Betonkern von außen abfräst. Diese Vorgänge werden durch die Kipp- und Dreheinheit 5 unterstützt, indem sie beim Auftrennen des Mantels nach dem Setzen eines Axialschnittes das Fass 6 um seine Längsachse um einen Winkel von beispielsweise 120° rotiert, um danach einen neuen Axialschnitt zu setzen. Beim Abfräsen des Betonkernmantels kann das Fass 6 mithilfe der Kipp- und Dreheinheit 5 um seine Längsachse rotiert werden, um den Fräsvorgang zu unterstützen. Die Schneidebewegung des zweiten Sägewerkzeuges 14 wird über einen mithilfe einer horizontalen Schiene 12.2 horizontal geführten Schlitten 11.2 ausgeführt, sodass das Sägeblatt des zweiten Sägewerkzeuges 14 in der gewünschten Schnitttiefe verbleibt. Die Tiefenzustellung erfolgt über einen Schwenkarm 10.2. Das zweite Sägewerkzeug 14 lässt sich mithilfe eines im Wesentlichen vertikalen Schienenpaars 13.2 vertikal stufenlos positionieren.

Die Sägewerkzeuge 9, 14 werden mit einem beschichteten Sägeblatt ausgestattet, um eine Trockenbearbeitung bei gewünschter Eintauchtiefe zu gewährleisten. Beide Sägewerkzeuge 9, 14 sind zudem mit einer Staubabsaugung versehene. Diese Staubabsaugung umfasst Schutzhauben für die Sägewerkzeuge 9, 14, sowie eine Absauganlage, sodass Sägestaub etwa über einen Zyklon-Vorabscheider in eine Filteranlage abgesaugt werden kann.

Beide Sägewerkzeuge 9, 14 können des Weiteren mit einem Bündig-Flansch ausgestattet sein. Dieser Bündig-Flansch erleichtert den Sägeblattwechsel und ermöglicht eine 1-Mann Montage des Sägeblatts. Die Sägewerkzeuge 9, 14 werden so montiert, dass das Sägeblatt von oben gewechselt werden kann.

Als Fräswerkzeug 15 dient ein Sägemodul, wobei das Sägeblatt durch eine Frässcheibe ersetzt wird. Auf dieser Frässcheibe sind PDK-Segmente tangential angeordnet, um den Betonkern trocken abzutragen. Die maximale Eintauchtiefe pro Arbeitsschritt beträgt 5mm. Diese Frässcheibe wird ebenfalls mit einer Schutzhaube ausgestattet, um eine staubfreie Bearbeitung zu ermöglichen. Die Tiefenzustellung erfolgt über einen Schwenkarm 10.3 und die Vorschubbewegung über einen spielfreien Schlitten 11.3, der über eine horizontale Schiene 12.3 horizontal geführt wird. Das Fräswerkzeug 15 lässt sich mithilfe eines im Wesentlichen vertikalen Schienenpaars 13.3 vertikal stufenlos positionieren. Die Betriebsdaten entsprechen denen der Sägemodule. Mithilfe einer Lichtschranke wird der Durchmesser des Betonkerns vermessen.

Die Staubabsaugung umfasst wie bereits erwähnt einen Zyklon-Vorabscheider und eine Absauganlage. Die Absauganlage ist mit HEPA-Filtern ausgestattet und hat eine Absaugleistung von 800 m³/h. Das Fräswerkzeug 15 wie auch die Sägewerkzeuge 9, 14 werden über einen elektro-pneumatisch gesteuerten Verteiler an diese Anlage angeschlossen. Die Staubabsaugung verfügt über einen dichten, absperrbaren Verschlussstutzen, um eine Kontaminationsverschleppung zu vermeiden. Der Schleif-oder Schneidestaub wird in einem Endlosschlauch entsorgt. Der Zyklon-Vorabscheider ist für den Aufbau auf Presskartuschen ausgeführt.

Die Werkzeugantriebe für die Sägewerkzeuge 9, 14, das Fräswerkzeug 15 und die Bohreinheit sind wassergekühlte Elektromotore mit Steckverbindung, die mit Strahlwasser gereinigt werden können. Die Werkzeugantriebe sind baugleich und untereinander austauschbar. Die Vorschubmotoren für die Sägewerkzeuge 9, 14, das Fräswerkzeug 15 und die Bohreinheit sind ebenfalls Permanentmagnet-Synchronmotoren und untereinander austauschbar. Die Wasserkühlung der Werkzeugantriebe kann in einem geschlossenen Kühlkreislauf erfolgen.

Die Steuerung wird mit einer SPS realisiert. Die Werkzeugantriebe der Sägewerkzeuge 9, 14, des Fräswerkzeuges 15 und der Bohreinheit sind Frequenzumrichter gesteuert und erlauben eine stufenlose Regelung der Antriebe. Die Kommunikation zwischen SPS und Frequenzumrichter erfolgt über PROFINET. Die Kabel der Werkzeugantriebe werden in Energieketten am Rahmen geführt.

Für die Bedienung ist ein fahrbares Steuerpult vorgesehen. Die Eingabe der Betriebsparameter und die Anzeige der Betriebsparameter wird über ein Touchpanel realisiert und ist im Steuerpult verbaut. Weiters sind im Steuerpult geeignete Bedienelemente (Joystick, Potentiometer und Wahlschalter für Betriebsmodi) verbaut.

Für Einstellarbeiten in der Bearbeitungskammer kann eine mobile Steuerbox vorgesehen sein. Diese Steuerbox ist durch einen Schlüsselschalter am Steuerpult gesichert. Dieser Schlüsselschalter schaltet den Arbeitsbereich für Wartungsarbeiten frei. Um eine einwandfreie Anlagenübersicht zu gewährleisten, wird ein Kamerasystem mit hochauflösenden, fernsteuerbaren Kameras verbaut. Diese Kameras sind mit Mikrofonen ausgestattet, um die Geräuschentwicklung überwachen zu können. Weiters wird die Kameralinse mit einem Luftvorhang geschützt.

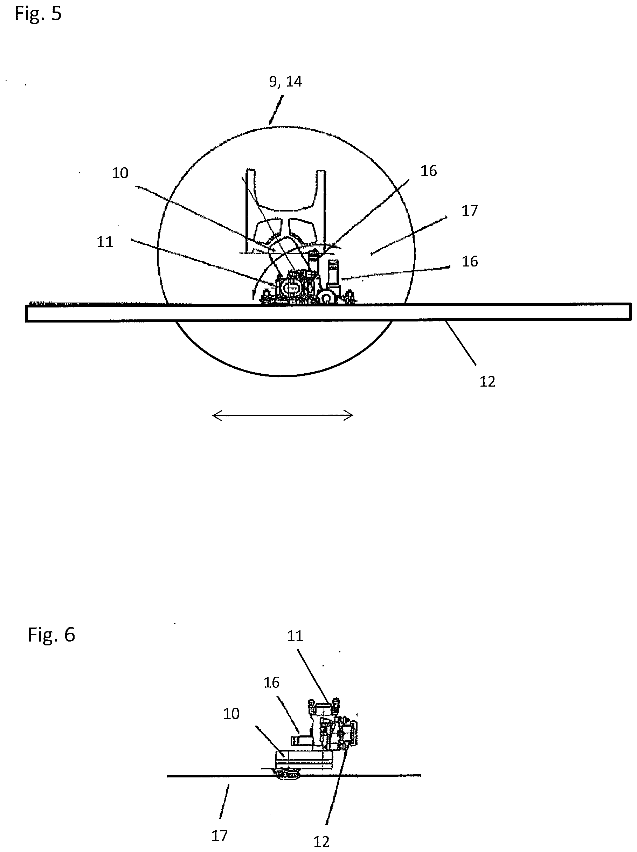

Anhand der Fig. 5 und 6 wird im Folgenden eine mögliche Ausführungsform der Lagerung eines Säge- oder Fräswerkzeuges 9, 14, 15 anhand des Sägewerkzeuges 9, 14 beschrieben. Das Sägewerkzeug 9, 14 ist mit seinem Sägekopf auf einem Schlitten 11 montiert, der auf einer horizontalen Schiene 12 entlang der horizontalen Schiene 12 in Richtung des Doppelpfeils bewegbar angeordnet ist. Die horizontale Schiene 12 ist wiederum auf einem im Wesentlichen vertikalen Schienenpaar 13 entlang des vertikalen Schienenpaars 13 bewegbar angeordnet. Am Sägekopf ist ein Schwenkarm 10 drehbar angelenkt, wobei der Schwenkarm 10 an seinem freien Ende das Sägewerkzeug 9, 14 trägt. Das Sägeblatt 17 des Sägewerkzeuges 9, 14 rotiert während der Bearbeitung des Fasses 6 um einen Drehpunkt, der sich im Bereich des freien Endes des Schwenkarmes 10 befindet, wobei der Schwenkarm 10 seinerseits gleichzeitig um einen Drehpunkt, der sich im Bereich des Schlittens 11 befindet, verschwenkt werden kann, und zwar in einer Ebene parallel zur Scheibenebene. Die Verschwenkbarkeit des Schwenkarmes 10 beträgt in dieser Ebene dabei vorzugsweise 360°. Der Drehantrieb des Sägewerkzeuges 9, 14 ist entweder am freien Ende des Schwenkarmes 10 angeordnet, um den Übertragungsweg für das Drehmoment vom Drehantrieb auf das Sägewerkzeug 9, 14 zu verkürzen, oder er ist am Sägekopf angeordnet und mit dem Sägewerkzeug 9, 14 über ein Getriebe verbunden, das den Schwenkarm 10 überbrückt. Der Schwenkantrieb für den Schwenkarm 10 wird vorzugsweise am Schlitten 11 angeordnet.

Hydraulikanschlüsse 16 dienen zur Verbindungserstellung zwischen dem Sägekopf und externen Antriebsaggregaten. In den Fig. 5 und 6 sind dabei aus Gründen der besseren Übersichtlichkeit Schlauch- oder Kabelzuführungen nicht dargestellt.

Zur Bearbeitung des Fasses 6 wird zunächst das Sägeblatt 17 in Rotation versetzt, und der Schwenkarm 10 in Pfeilrichtung verschwenkt. Das Sägeblatt 17 dringt in weiterer Folge in das zu bearbeitende Fass 6 ein und trennt es. Die Eindringtiefe kann dabei je nach Schwenkposition des Schwenkarmes 10 variabel gewählt werden. Eine horizontale Vorschubbewegung entlang des eingezeichneten Doppelpfeils kann durch Verfahren des Schlittens 11 entlang der horizontalen Schiene 12 erfolgen.

Das Säge- oder Fräswerkzeug 9, 14, 15 kann des Weiteren mit einer programmierbaren Steuerung ausgestattet werden, mit der die maßgeblichen Betriebsparameter, wie etwa Umfangsgeschwindigkeit, Vorschubgeschwindigkeit, Vorschub- und Schwenkbewegungen, sowie die Verfahrwege und deren Abfolge, entsprechend der jeweiligen Bearbeitungssituation vorprogrammiert werden können. Damit kann das Säge- oder Fräswerkzeug 9, 14, 15 den gesamten Bearbeitungsvorgang selbständig und automatisch durchführen, was bei den von Kontamination bedrohten Arbeitsbedingungen erhebliche Vorteile bringt.

Mithilfe der Erfindung wird somit eine Vorrichtung zum Entmanteln, Öffnen oder Zurichten stahlummantelter Fässer mit einbetoniertem radioaktiven Inhalt bereitgestellt, mit der die Behandlung inhomogener sowie homogener Fässer möglich ist, wobei insbesondere stahlummantelte Fässer mit einbetoniertem radioaktivem Inhalt ohne erforderliche Wasserkühlung geöffnet, entmantelt und zugerichtet werden können. Auf diese Weise können das Lagervolumen und somit die Lagerkosten für radioaktiven Abfall erheblich reduziert werden.

## Patentansprüche

1. Vorrichtung zum Entmanteln, Öffnen oder Zurichten stahlummantelter Fässer (6) mit einbetoniertem radioaktivem Inhalt, wobei eine Bearbeitungskammer mit einer Übernahmeöffnung für die Fässer (6) vorgesehen ist, sowie eine in der Bearbeitungskammer angeordnete Kipp- und Dreheinheit (5) zur Aufnahme der Fässer (6), wobei ein mit seiner Längsachse parallel zu einer Längserstreckung der Kipp-und Dreheinheit (5) aufgenommenes Fass (6) von der Kipp- und Dreheinheit (5) um seine Längsachse drehbar ist, und die Kipp-und Dreheinheit (5) von einer aufrechten Position mit einer im Wesentlichen vertikalen Längserstreckung der Kipp- und Dreheinheit (5) in eine liegende Position mit einer im Wesentlichen horizontalen Längserstreckung der Kipp- und Dreheinheit (5) kippbar ist, **dadurch gekennzeichnet, dass** zumindest zwei Säge- oder Fräswerkzeuge (9, 14, 15) vorgesehen sind, wobei zumindest ein Säge- oder Fräswerkzeug (9) zum Entmanteln, Öffnen oder Zurichten des Fasses (6) bei aufrechter Position der Kipp- und Dreheinheit (5) in seiner Vorschubbewegung quer zur Längserstreckung der Kipp- und Dreheinheit (5) geführt ist, und zumindest ein Säge- oder Fräswerkzeug (14, 15) zum Entmanteln, Öffnen oder Zurichten des Fasses (6) bei liegender Position der Kipp- und Dreheinheit (5) in seiner Vorschubbewegung entlang der Längserstreckung der Kipp- und Dreheinheit (5) geführt ist.

2. Vorrichtung nach Anspruch 1, **dadurch gekennzeichnet, dass** zwei rotierende Säge- oder Fräswerkzeuge (14, 15) zum Entmanteln, Öffnen oder Zurichten des Fasses (6) bei liegender Position der Kipp- und Dreheinheit (5) vorgesehen sind, wobei eines der beiden Säge-oder Fräswerkzeuge (14, 15) als ein entlang der Längserstreckung der Kipp- und Dreheinheit (5) geführtes Sägewerkzeug (14) mit horizontaler Rotationsebene ausgeführt ist, und eines der beiden Säge- oder Fräswerkzeuge (14, 15) als ein entlang der Längserstreckung der Kipp- und Dreheinheit (5) geführtes Fräswerkzeug (15) mit vertikaler Rotationsebene ausgeführt ist.

3. Vorrichtung nach Anspruch 1 oder 2, **dadurch gekennzeichnet, dass** ein quer zur Längserstreckung der Kipp- und Dreheinheit (5) geführtes, rotierendes Sägewerkzeug (9) zum Entmanteln, Öffnen oder Zurichten des Fasses (6) bei aufrechter Position der Kipp- und Dreheinheit mit horizontaler Rotationsebene vorgesehen ist.

4. Vorrichtung nach einem der Ansprüche 1 bis 3, **dadurch gekennzeichnet, dass** die Säge- oder Fräswerkzeuge (9, 14, 15) jeweils auf einem horizontal bewegbaren Schlitten (11) gelagert sind.

5. Vorrichtung nach einem der Ansprüche 1 bis 4, **dadurch gekennzeichnet, dass** rotierende Säge- oder Fräswerkzeuge (9, 14, 15) vorgesehen sind, die jeweils von einem Schwenkarm (10) mit einer zur Rotationsebene des jeweiligen Säge- oder Fräswerkzeuges (9, 14, 15) rechtwinkeligen Schwenkachse geführt sind.

6. Vorrichtung nach einem der Ansprüche 1 bis 5, **dadurch gekennzeichnet, dass** das zumindest eine Säge- oder Fräswerkzeug (9, 14, 15) auf einem vertikal bewegbaren Schlitten (11) gelagert ist.

7. Vorrichtung nach einem der Ansprüche 1 bis 6, **dadurch gekennzeichnet, dass** die Bearbeitungskammer mit einer verschließbaren Dachöffnung versehen ist.

8. Vorrichtung nach einem der Ansprüche 1 bis 7, **dadurch gekennzeichnet, dass** die rotierenden Säge- oder Fräswerkzeuge (9, 14, 15) in ihrem Umfangsbereich mit einer Staubabsaugung versehen sind.

9. Vorrichtung nach einem der Ansprüche 1 bis 8, **dadurch gekennzeichnet, dass** die Kipp- und Dreheinheit (5) eine den Mantel eines aufgenommenen Fasses (6) teilweise umfassende Aufnahme mit einer konkaven Aufnahmefläche aufweist, wobei die Aufnahme mit die Aufnahmefläche überragende Drehrollen versehen ist.

## Claims

1. Device for decladding, opening or trimming steel-clad drums (6) containing concreted radioactive content, wherein a machining chamber having a transfer opening for the drums (6) is provided, as well as a tilting and rotating unit (5) which is arranged in the machining chamber and serves for receiving the drums (6), wherein a drum (6) that is received with its longitudinal axis parallel to a longitudinal extension of the tilting and rotating unit (5) can be rotated about its longitudinal axis by the tilting and rotating unit (5), and the tilting and rotating unit (5) can be tilted from an upright position with a substantially vertical longitudinal extension of the tilting and rotating unit (5) to a lying position with a substantially horizontal longitudinal extension of the tilting and rotating unit (5), **characterized in that** at least two sawing or milling tools (9, 14, 15) are provided, wherein at least one sawing or milling tool (9) for decladding, opening or trimming the drum (6) when the tilting and rotating unit (5) is in the upright position is guided in its advancing movement transversely to the longitudinal extension of the tilting and rotating unit (5), and at least one sawing or milling tool (14, 15) for decladding, opening or trimming the drum (6) when the tilting and rotating unit (5) is in the lying position is guided in its advancing movement along the longitudinal extension of the tilting and rotating unit (5).

2. Device according to claim 1, **characterized in that** two rotating sawing or milling tools (14, 15) for decladding, opening or trimming the drum (6) when the tilting and rotating unit (5) is in the lying position are provided, wherein one of the two sawing or milling tools (14, 15) is configured as a sawing tool (14) with a horizontal plane of rotation which is guided along the longitudinal extension of the tilting and rotating unit (5), and one of the two sawing or milling tools (14, 15) is configured as a milling tool (15) with a vertical plane of rotation which is guided along the longitudinal extension of the tilting and rotating unit (5).

3. Device according to claim 1 or 2, **characterized in that** a rotating sawing tool (9), which is guided transversely to the longitudinal extension of the tilting and rotating unit (5) and serves for decladding, opening or trimming the drum (6) when the tilting and rotating unit is in the upright position, is provided with a horizontal plane of rotation.

4. Device according to any one of claims 1 to 3, **characterized in that** the sawing or milling tools (9, 14, 15) are each mounted on a horizontally movable carriage (11).

5. Device according to any one of claims 1 to 4, **characterized in that** rotating sawing or milling tools (9, 14, 15) are provided, which are each guided by a pivot arm (10) having a pivot axis that is at a right angle to the plane of rotation of the respective sawing or milling tool (9, 14, 15).

6. Device according to any one of claims 1 to 5, **characterized in that** the at least one sawing or milling tool (9, 14, 15) is mounted on a vertically movable carriage (11).

7. Device according to any one of claims 1 to 6, **characterized in that** the machining chamber is provided with a closable roof opening.

8. Device according to any one of claims 1 to 7, **characterized in that** the rotating sawing or milling tools (9, 14, 15) are provided with a dust extraction system in the circumferential area thereof.

9. Device according to any one of claims 1 to 8, **characterized in that** the tilting and rotating unit (5) has a receptacle with a concave receiving surface which partially encircles the cladding of a received drum (6), wherein the receptacle is provided with rotating rollers which protrude beyond the receiving surface.

## Revendications

1. Dispositif pour désenvelopper, ouvrir ou débiter des fûts (6) ayant une enveloppe en acier et contenant des matières radioactives scellées dans du béton, dans lequel il est prévu une chambre de traitement avec une ouverture de réception pour les fûts (6) ainsi qu'une unité basculante et rotative (5) disposée dans la chambre de traitement pour recevoir les fûts (6), dans lequel un fût (6) reçu avec son axe longitudinal parallèle à une extension longitudinale de l'unité basculante et rotative (5) peut être tourné autour de son axe longitudinal par l'unité basculante et rotative (5), et l'unité basculante et rotative (5) peut être basculée d'une position debout avec une extension longitudinale sensiblement verticale de l'unité basculante et rotative (5) dans une position couchée avec une extension longitudinale sensiblement horizontale de l'unité basculante et rotative (5) ,
**caractérisé en ce qu'**il est prévu au moins deux outils de sciage ou de fraisage (9, 14, 15), au moins un outil de sciage ou de fraisage (9) pour désenvelopper, ouvrir ou débiter le fût (6) étant guidé dans son mouvement d'avance transversalement à l'extension longitudinale de l'unité basculante et rotative (5) lorsque l'unité basculante et rotative (5) est en position debout, et au moins un outil de sciage ou de fraisage (14, 15) pour désenvelopper, ouvrir ou débiter le fût (6) étant guidé dans son mouvement d'avance suivant l'extension longitudinale de l'unité basculante et rotative (5) lorsque l'unité basculante et rotative (5) est en position couchée.

2. Dispositif selon la revendication 1, **caractérisé en ce que** deux outils de sciage ou de fraisage rotatifs (14, 15) sont prévus pour désenvelopper, ouvrir ou débiter le fût (6) lorsque l'unité basculante et rotative (5) est en position couchée, l'un des deux outils de sciage ou de fraisage (14, 15) étant conçu comme un outil de sciage (14) à plan de rotation horizontal et guidé suivant l'extension longitudinale de l'unité basculante et rotative (5), et l'un des deux outils de sciage ou de fraisage (14, 15) étant conçu comme un outil de fraisage (15) à plan de rotation vertical et guidé suivant l'extension longitudinale de l'unité basculante et rotative (5).

3. Dispositif selon la revendication 1 ou 2, **caractérisé en ce qu'**un outil de sciage rotatif (9), guidé transversalement à l'extension longitudinale de l'unité basculante et rotative (5) pour désenvelopper, ouvrir ou débiter le fût (6) lorsque l'unité basculante et rotative (5) est en position debout, est prévu avec un plan de rotation horizontal.

4. Dispositif selon l'une des revendications 1 à 3, **caractérisé en ce que** les outils de sciage ou de fraisage (9, 14, 15) sont chacun montés sur un chariot (11) mobile horizontalement.

5. Dispositif selon l'une des revendications 1 à 4, **caractérisé en ce qu'**il est prévu des outils de sciage ou de fraisage rotatifs (9, 14, 15) qui sont guidés chacun par un bras pivotant (10) dont l'axe de pivotement est perpendiculaire au plan de rotation de l'outil de sciage ou de fraisage respectif (9, 14, 15).

6. Dispositif selon l'une des revendications 1 à 5, **caractérisé en ce qu'**au moins un outil de sciage ou de fraisage (9, 14, 15) est monté sur un chariot (11) mobile verticalement.

7. Dispositif selon l'une des revendications 1 à 6, **caractérisé en ce que** la chambre de traitement est pourvue d'une ouverture de toit pouvant être fermée.

8. Dispositif selon l'une des revendications 1 à 7, **caractérisé en ce que** les outils de sciage ou de fraisage rotatifs (9, 14, 15) sont pourvus d'une aspiration des poussières dans leur zone périphérique.

9. Dispositif selon l'une des revendications 1 à 8, **caractérisé en ce que** l'unité basculante et rotative (5) présente une partie de réception avec une surface de réception concave qui entoure partiellement l'enveloppe d'un fût reçu (6), la partie de réception étant pourvue de rouleaux rotatifs s'étendant au-delà de la surface de réception.
